# EUROPÄISCHE PATENTSCHRIFT

(11) **EP 2 099 557 B1**
(45) Veröffentlichungstag und Bekanntmachung des Hinweises auf die Patenterteilung: **23.03.2016**
(21) Anmeldenummer: 07857312.8
(22) Anmeldetag: 10.12.2007
(51) Int. Cl.: B01J 13/14, D06M 23/12, F28D 20/02, C09K 5/10

(54) **MIKROKAPSELN**
MICROCAPSULES
MICROCAPSULES

(30) Priorität: 13.12.2006 EP 06126017
(43) Veröffentlichungstag der Anmeldung: 16.09.2009
(73) Patentinhaber: BASF SE, 67056 Ludwigshafen (DE)
(72) Erfinder: JUNG, Marc Rudolf, 67547 Worms (DE); HENTZE, Hans-Peter, 68161 Mannheim (DE); DYLLICK-BRENZINGER, Rainer, 67435 Neustadt (DE); NIEDERBERGER, Dieter, 67065 Ludwigshafen (DE); WILLAX, Hans, 67133 Maxdorf (DE)
(86) Internationale Anmeldenummer: PCT/EP2007/063580
(87) Internationale Veröffentlichungsnummer: WO 2008/071649

(56) Entgegenhaltungen:
- WO-A-02/02222
- WO-A-02/20683
- WO-A-2008/006762
- WO-A-2008/046839
- DE-A1- 4 321 205
- DE-A1- 10 139 171
- US-A- 4 708 924
- US-A1- 2002 135 084
- US-A1- 2002 169 233

## Beschreibung

Die vorliegende Erfindung betrifft Mikrokapseln umfassend einen Kapselkern und eine Kapselwand aufgebaut aus C₁-C₂₄-Alkylester der Acryl- und/oder Methacrylsäure, Acrylsäure, Methacrylsäure und/oder Maleinsäure, Vernetzern sowie gegebenenfalls sonstigen Monomeren. Außerdem betrifft die vorliegende Erfindung ein Verfahren zu ihrer Herstellung, ihre Verwendung in Textilien, Bindebaustoffen und Wärmeträgerflüssigkeiten.

In den letzten Jahren sind als neue Materialkombination Textilien mit Latentwärmespeichern untersucht worden. Die Funktionsweise der Latentwärmespeicher, oftmals auch als PCM (phase change material) bezeichnet, beruht auf der beim fest/flüssig-Phasenübergang auftretenden Umwandlungsenthalpie, die eine Energieaufnahme oder Energieabgabe an die Umgebung bedeutet. Sie können damit zur Temperaturkonstanthaltung in einem festgelegten Temperaturbereich verwendet werden.

Die EP-A 1 029 018 lehrt die Verwendung von Mikrokapseln mit einer Kapselwand aus einem hochvernetzten Methacrylsäureesterpolymer und einem Latentwärmespeicherkern in Bindebaustoffen wie Beton oder Gips. Die DE-A 101 39 171 beschreibt die Verwendung von mikroverkapselten Latentwärmespeichermaterialien in Gipskartonplatten. Ferner lehrt die WO 2005/116559 den Einsatz von mikroverkapselten Latentwärmespeichermaterialien in Spanplatten zusammen mit Melaminformaldehydharzen als Bindemittel.

Die EP-A 1 321 182 lehrt mikroverkapselte Latentwärmespeichermaterialien mit einer Kapselwand aus einem hochvernetzten Methacrylsäureesterpolymer und nennt auch deren Verwendung in Textilien. Lehre dieser Schrift sind Mikrokapseldispersionen mit einem besonders geringen Anteil an Kapseln der Teilchengröße ≤ 4 µm.

Die EP-A 1 251 954 und die WO 2005/105291 lehren Mikrokapseln auf Polymethacrylsäurebasis ohne bzw. mit Butandioldiacrylat als Vernetzer. Die Kapseln mit Teilchengrößen von 1,2 µm werden zur Imprägnierung von Fasern eingesetzt.

Für Anwendungen zur Ausrüstung im Textilsektor ist ein wichtiges Kriterium die chemische Reinigungsbeständigkeit. Hiermit ist die Beständigkeit gegenüber chlorierten oder perchlorierten Lösungsmitteln gemeint. So ist bei herkömmlichen Mikrokapseln oftmals eine Gewichtsabnahme zu beobachten, die auf unzureichend dichte oder defekte Kapseln deutet. Derartige Auswaschverluste können dabei im Bereich von 5-15 Gew.-% liegen.

Die beiden älteren europäischen Anmeldungen No. 06117092.4 und 06122419.2 schlagen zur Lösung dieses Problems Mikrokapseln vor, deren Oberfläche zusätzlich mit einem Polyelektrolyt modifiziert wurde.

Neben einem geringeren Auswaschverlust ist auch eine geringe Abdampfrate eine wichtige Anforderung an die Kapseln, da die Kapseln in der Regel bei hohen Temperaturen verarbeitet werden. Während es bei der Abdampfrate für Textilanwendungen auf eher kurze Temperaturbelastungen ankommt, so ist für Anwendungen im Bausektor ein gute Dichtigkeit über einen langen Zeitraum erforderlich.

Aufgabe der vorliegenden Erfindung waren daher Mikrokapseln, die bei den unterschiedlichsten Kapselgrößenverteilungen eine geringe Abdampfrate aufweisen.

Dem gemäß wurden Mikrokapseln gefunden, umfassend einen Kapselkern und eine Kapselwand, wobei die Kapselwand aufgebaut ist aus
- 30 bis 90 Gew.-%: eines oder mehrerer C₁-C₂₄-Alkylester der Acryl- und/oder Methacrylsäure, Acrylsäure, Methacrylsäure und/oder Maleinsäure (Monomere I),
- 10 bis 70 Gew.-%: einer Mischung aus Divinyl- und Polyvinylmonomeren (Monomere II), wobei der Anteil der Polyvinylmonomere 2 bis 90 Gew.-% bezogen auf die Monomere II beträgt sowie
- 0 bis 30 Gew.-%: eines oder mehrerer sonstiger Monomere (Monomer III)
jeweils bezogen auf das Gesamtgewicht der Monomere, ein Verfahren zu ihrer Herstellung sowie ihre Verwendung in Textilien, Bindebaustoffen und Wärmeträgerflüssigkeiten.

Die erfindungsgemäßen Mikrokapseln umfassen einen Kapselkern und eine Kapselwand. Der Kapselkern besteht überwiegend, zu mehr als 95 Gew.-%, aus lipophiler Substanz. Die mittlere Teilchengröße der Kapseln (Z-Mittel mittels Lichtstreuung) beträgt 0,5 bis 100 µm, bevorzugt 1 bis 80 µm, insbesondere 1 bis 50 µm.

Gemäß einer bevorzugten Ausführungsform beträgt die mittlere Teilchengröße der Kapseln 1,5 bis 2,5 µm, bevorzugt 1,7 bis 2,4 µm. Dabei haben 90 % der Teilchen eine Teilchengröße (Durchmesser) ≤ 4 µm, bevorzugt ≤ 3,5 µm, insbesondere ≤ 3 µm. Die Halbwertsbreite der Mikrokapselverteilung beträgt bevorzugt 0,2 bis 1,5 µm insbesondere 0,4 bis 1 µm.

Gemäß einer ebenfalls bevorzugten Ausführungsform beträgt die mittlere Teilchengröße der Kapseln >2,5 bis 20 µm, bevorzugt 3,0 bis 15 µm.

Das Gewichtsverhältnis von Kapselkern zu Kapselwand beträgt im allgemeinen von 50 : 50 bis 95 : 5. Bevorzugt wird ein Kern/Wand-Verhältnis von 70 : 30 bis 93 : 7.

Die Polymere der Kapselwand enthalten im Allgemeinen mindestens 30 Gew.-%, in bevorzugter Form mindestens 35 Gew.-% und in besonders bevorzugter Form mindestens 40 Gew.-% sowie im Allgemeinen höchstens 90 Gew.-%, vorzugsweise höchstens 80 Gew.-% und in besonders bevorzugter Form höchstens 75 Gew.-% C₁-C₂₄-Alkylester der Acryl- und/oder Methacrylsäure, Acrylsäure, Methacrylsäure und/oder Maleinsäure (Monomere I) einpolymerisiert, bezogen auf das Gesamtgewicht der Monomere.

Erfindungsgemäß enthalten die Polymere der Kapselwand im Allgemeinen mindestens 10 Gew.-%, bevorzugt mindestens 15 Gew.-%, vorzugsweise mindestens 20 Gew.-% sowie im Allgemeinen höchstens 70 Gew.-%, vorzugsweise höchstens 60 Gew.-% und in besonders bevorzugter Form höchstens 50 Gew.-% einer Mischung aus Divinyl- und Polyvinylmonomeren (zusammen Monomere II) einpolymerisiert, bezogen auf das Gesamtgewicht der Monomere. Es können ein oder mehrere Divinylmonomere sowie ein oder mehrere Polyvinylmonomere einpolymerisiert werden.

Dabei wird als Monomere II eine Mischung aus Divinyl- und Polyvinylmonomeren eingesetzt, wobei der Anteil der Polyvinylmonomeren 2 bis 90 Gew.-% bezogen auf die Summe aus Divinyl- und Polyvinylmonomeren beträgt. Bevorzugt beträgt der Anteil der Polyvinylmonomeren 5 bis 80 Gew.-%, vorzugsweise 10 bis 60 Gew.-%, bezogen auf die Summe aus Divinyl- und Polyvinylmönomeren. Für Mikrokapseln mit einer mittleren Teilchengröße < 2,5 µm beträgt der Polyvinylmonomeranteil bevorzugt 20 bis 80 Gew.-%, insbesondere 30 bis 60 Gew.-% bezogen auf die Summe aus Divinyl- und Polyvinylmonomeren. Für Mikrokapseln mit einer mittleren Teilchengröße ≥ 2,5 µm beträgt der Polyvinylmonomeranteil bevorzugt 5 bis 40 Gew.-%, insbesondere 10 bis 30 Gew.-% bezogen auf die Summe aus Divinyl- und Polyvinylmonomeren.

Daneben können die Polymere bis zu 30 Gew.-%, bevorzugt bis zu 20 Gew.-%, insbesondere bis zu 10 Gew.-%, besonders bevorzugt bis zu 5 Gew.-% sowie mindestens 1 Gew.-%, sonstige Monomere III, bevorzugt Monomere IIIa, einpolymerisiert enthalten, bezogen auf das Gesamtgewicht der Monomere.

Vorzugsweise ist die Kapselwand nur aus Monomeren der Gruppen I und II aufgebaut.

Als Monomere I eignen sich C₁-C₂₄-Alkylester der Acryl- und/oder Methacrylsäure (Monomere la). Weiterhin eignen sich die ungesättigten C₃- und C₄-Carbonsäuren wie Acrylsäure, Methacrylsäure sowie Maleinsäure (Monomere Ib). Besonders bevorzugte Monomere I sind Methyl-, Ethyl-, n-Propyl- und n-Butylacrylat und/oder die entsprechenden Methacrylate. Bevorzugt sind iso-Propyl-, iso-Butyl-, sec.-Butyl- und tert.-Butylacrylat und die entsprechenden Methacrylate. Generell werden die Methacrylate und Methacrylsäure bevorzugt.

Nach einer bevorzugten Ausführungsform sind die Mikrokapselwände aus 25 Gew.-% bis 75 Gew.-% Maleinsäure und/oder Acrylsäure insbesondere Methacrylsäure aufgebaut.

Geignete Divinylmonomere sind Divinylbenzol, Trivinylbenzol und Divinylcyclohexan und Trivinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole. Bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Bevorzugt werden die Kombinationen aus Butandioldiacrylat und Pentaeritrittetraacrylat, Hexandioldiacrylat und Pentaeritrittetraacrylat, Butandiotdiacrylat und Trimethylolpropantriacrylat sowie Hexandioldiacrylat und Trimethylolpropantriacrylat.

Als Monomere III kommen sonstige Monomere, die von den Monomeren I und II verschieden sind, wie Vinylacetat, Vinylpropionat, Vinylpyridin und Styrol oder α-Methylstyrol in Betracht. Besonders bevorzugt werden Ladung tragende oder ionisierbare Gruppen tragende Monomere IIIa, die von den Monomeren I und II verschieden sind; wie Itaconsäure, Maleinsäureanhydrid, 2-Hydroxyethylacrylat und -methacrylat, Acrylamido-2-methylpropansulfonsäure, Methaycrylnitril, Acrylnitril, Methacrylamid, N-Vinylpyrrolidon, N-Methylolacrylarnid, N-Methylolmethacrylamid, Dimethylaminoethylmethacrylat und Diethylaminoethylmethacrylat.

Bevorzugt ist die Kapselwand aufgebaut aus
- 30 bis 90 Gew.-%: einer Mischung aus Monomeren Ia und Ib, wobei der Anteil der Monomeren Ib < 25 Gew.-% bezogen auf das Gesamtgewicht aller Monomere I, II und III ist,
- 10 bis 70 Gew.-%: einer Mischung aus Divinyl- und Polyvinylmonomeren (Monomere II), wobei der Anteil der Polyvinylmonomere 2 bis 90 Gew.-% bezogen auf die Monomere II beträgt sowie
- 0 bis 30 Gew.-%: sonstige Monomere III,
jeweils bezogen auf das Gesamtgewicht der Monomere.

Nach einer weiteren bevorzugten Ausführungsform ist die Kapselwand aufgebaut ist aus
- 30 bis 90 Gew.-%: einer Mischung aus Monomeren Ia und Ib, wobei der Anteil der Monomeren Ib ≥ 25 Gew.-% bezogen auf das Gesamtgewicht aller Monomere I, II und III ist,
- 10 bis 70 Gew.-%: einer Mischung aus Divinyl- und Polyvinylmonomeren (Monomere II), wobei der Anteil der Polyvinylmonomere 2 bis 90 Gew.-% bezogen auf die Monomere II beträgt sowie
- 0 bis 30 Gew.-%: sonstige Monomere III,
jeweils bezogen auf das Gesamtgewicht der Monomere.

Die erfindungsgemäßen Mikrokapseln lassen sich durch eine sogenannte in-situ-Polymerisation herstellen. Das Prinzip der Mikrokapselbildung basiert darauf, dass man aus den Monomeren, einem Radikalstarter, einem Schutzkolloid und der einzukapselnden lipophilen Substanz eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A-10 139 171 beschrieben auf deren Inhalt ausdrücklich Bezug genommen wird.

In der Regel werden die Mikrokapseln in Gegenwart wenigstens eines organischen oder anorganischen Schutzkolloids hergestellt. Sowohl organische wie auch anorganische Schutzkolloide können ionisch oder neutral sein kann. Schutzkolloide können dabei sowohl einzeln wie auch in Mischungen mehrerer gleich oder unterschiedlich geladener Schutzkolloide eingesetzt werden.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose.

Organische anionische Schutzkolloide sind Natriumalginat, Polymethacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide, sind sogenannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind. Die Wirkweise und ihr Einsatz ist in der EP-A-1 029 018 sowie der EP-A-1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von ÖI-in-Wasser zugegeben werden. Manche feinen, festen Partikel werden durch eine Fällung hergestellt, wie in der EP-A 1 029 018, sowie der EP-A 1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der ÖI-in-Wasser Emulsion mit einer Säure auf pH 2 bis 7 eingestellt wird.

Bevorzugt verwendet man organische Schutzkolloide gegebenenfalls in Mischung mit anorganischen Schutzkolloiden.

Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Gemäß einer Ausführungsform werden anorganische Schutzkolloide sowie ihre Mischungen mit organischen Schutzkolloiden bevorzugt.

Gemäß einer weiteren Ausführungsform werden organisch neutrale Schutzkolloide bevorzugt. Besonders bevorzugt werden OH-Gruppen tragende Schutzkolloide wie Polyvinylalkohole und teilhydrolysierte Polyvinylacetate.

Im allgemeinen werden Polyvinylalkohol und/oder teilhydrolysiertes Polyvinylacetat in einer Gesamtmenge von mindestens 3 Gew.-%, vorzugsweise von 6 bis 8 Gew.-% eingesetzt, bezogen auf die Mikrokapseln (ohne Schutzkolloid). Dabei ist es möglich, weitere oben genannte Schutzkolloide zusätzlich zu der bevorzugte Mengen Polyvinylalkohol oder teilhydrolysiertem Polyvinylacetat zuzusetzen. Bevorzugt werden die Mikrokapseln nur mit Polyvinylalkohol und/oder teilhydrolysiertem Polyvinylacetat und ohne Zusatz weiterer Schutzkolloide hergestellt.

Gemäß einer weiteren Ausführungsform werden Mischungen organischer Schutzkolloide wie Polyvinylalkohole zusammen mit Cellulosederivaten bevorzugt.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen unter Bildung von Hydroxylgruppen. Der Hydrolysegrad der Polymeren kann beispielsweise 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von < 50% und unter Polyvinylalkohol von ≥ 50 bis 100 % zu verstehen. Die Herstellung von Homo- und Copolymerisaten von Vinylacetat sowie die Hydrolyse dieser Polymerisate unter Bildung von Vinylalkoholeinheiten enthaltenden Polymeren ist allgemein bekannt. Vinylalkoholeinheiten enthaltende Polymere werden beispielsweise als Mowiol^{®} Marken von Kuraray Specialities Europe (KSE) vertrieben.

Bevorzugt werden Polyvinylalkohole und/oder teilhydrolysierte Polyvinylacetate, deren Viskosität einer 4 gew.-%igen wässrigen Lösung bei 20 °C nach DIN 53015 einen Wert im Bereich von 3 bis 56 mPa·s aufweist, bevorzugt einem Wert von 14 bis 45 mPa·s. Bevorzugt werden Polyvinylalkohole mit einem Hydrolysegrad von ≥ 65%, bevorzugt ≥ 70% insbesondere ≥ 75%.

Der Einsatz von Polyvinylalkohol und/oder teilhydrolysiertem Polyvinylacetat führt zu stabilen Emulsionen auch bei kleinen mittleren Tröpfchengrößen wie 1,5 - 2,5 µm. Dabei entspricht die Größe der Öltröpfchen nahezu der Größe der nach der Polymerisation vorliegenden Mikrokapseln.

Verfahren zur Herstellung von Mikrokapseln, indem man
a) eine Öl-in-Wasser-Emulsion, enthaltend die Monomere, die lipophile Substanz und Polyvinylalkohol und/oder teilhydrolysiertes Polyvinylacetat herstellt, wobei die mittlere Größe der Öltröpfchen 1,5 - 2,5 µm beträgt, und
b) die Monomere der nach a) erhaltenen ÖI-in-Wasser-Emulsion radikalisch polymerisiert.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

Weiterhin ist es möglich zur Polymerisation dem Fachmann bekannte Regler in üblichen Mengen zuzusetzen wie tert-Dodecylmercaptan oder Ethylhexylthioglycolat.

In der Regel führt man die Polymerisation bei 20 bis 100°C, vorzugsweise bei 40 bis 95°C durch. Abhängig von der gewünschten lipophilen Substanz ist die ÖI-in-Wasser-Emulsion bei einer Temperatur zu bilden, bei der das Kernmaterial flüssig/ölig ist. Entsprechend muss ein Radikalstarter gewählt werden, dessen Zerfallstemperatur oberhalb dieser Temperatur und die Polymerisation ebenfalls 2 bis 50°C oberhalb dieser Temperatur durchgeführt werden, so dass man gegebenenfalls Radikalstarter wählt, deren Zerfallstemperatur oberhalb des Schmelzpunkts der lipophilen Substanz liegt.

Eine gängige Verfahrensvariante für lipophile Substanzen mit einem Schmelzpunkt bis etwa 60°C ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reäktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z. B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Eine erfindungsgemäße Verfahrensvariante unter Einsatz von Polyvinylalkohol und/oder teilhydrolysiertem Polyvinylacetat ermöglicht eine vorteilhafte Verfahrensweise, gemäß der direkt bei erhöhter Temperatur dispergiert und polymerisiert wird.

Im Anschluss an die eigentliche Polymerisationsreaktion bei einem Umsatz von 90 bis 99 Gew.-% ist es in der Regel vorteilhaft, die wässrigen Mikrokapseldispersionen weitgehend frei von Geruchsträgern, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitüerte Polymerisation, wie in der DE-A 44 35 423, DE-A 44 19 518 und DE-A 44 35 422 beschrieben.

Die erfindungsgemäßen Mikrokapseln sind je nach lipophiler Substanz für Durchschreibepapier, in der Kosmetik, zur Verkapselung von Klebstoffen, Klebstoffkomponenten, Katalysatoren oder im Pflanzenschutz bzw. allgemein zur Verkapselung von Bioziden geeignet. Besonders eignen sich die erfindungsgemäßen Mikrokapseln für Latentwärmespeichermaterialien.

Latentwärmespeichermaterialien sind definitionsgemäß Substanzen, die in dem Temperaturbereich, in welchem eine Wärmeübertragung vorgenommen werden soll, einen Phasenübergang aufweisen. Vorzugsweise weist die lipophile Substanz einen fest/flüssig Phasenübergang im Temperaturbereich von -20 bis 120°C auf.

Als geeignete Substanzen sind beispielhaft zu nennen:
- aliphatische Kohlenwasserstoffverbindungen wie gesättigte oder ungesättigte C₁₀-C₄₀-Kohlenwasserstoffe, die verzweigt oder bevorzugt linear sind, wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder n-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B: Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den lipophilen Substanzen in ihnen lösliche Verbindungen zuzugeben, um so die zum Teil bei den unpolaren Substanzen auftretende Kristallisationsverzögerung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatische Kohlenwasserstoffverbindungen. Sie werden in Mengen von 0,1 bis 10 Gew.-% bezogen auf den Kapselkern zugesetzt.

Je nach Temperaturbereich, in dem die Wärmespeicher gewünscht sind, werden die Latentwärmespeichermaterialien gewählt. Beispielsweise verwendet man für Wärmespeicher in Baustoffen in gemäßigtem Klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C. Bei Solaranwendungen als Speichermedium oder zur Überhitzungsvermeidung von transparenter Wärmedämmung, wie in der EP-A 333 145 beschrieben, sind vor allem Umwandlungstemperaturen von 30-60°C geeignet. Für Anwendungen im Textilsektor sind vor allem Umwandlungstemperaturen von 0 bis 40 °C vorteilhaft, für Wärmeträgerflüssigkeiten von -10 bis 120°C.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Gemäß einer bevorzugten Ausführungsform sind auf der äußeren Oberfläche der Kapselwand zusätzlich Polyelektrolyte angeordnet. Je nach Menge an Polyelektrolyt handelt es sich um eine punktuelle Anordnung des Polyelektrolyten, um Polyelektrolytbereiche auf der Oberfläche bis hin zu einer gleichmäßigen Anordnung des Polyelektrolyten, die einer Schicht oder Hülle ähnelt.

In der Regel beträgt der Anteil des Polyelektrolyten 0,1 bis 10 Gew.-% bezogen auf das Gesamtgewicht der polyelektrolyttragenden Mikrokapseln. Bevorzugt beträgt der Anteil Polyelektrolyt 0,5 - 5 Gew.-%, insbesondere 1 - 3 Gew.-% bezogen auf das Gesamtgewicht der polyelektrolyttragenden Mikrokapseln.

Je nach Anwendungsgebiet können unterschiedliche Wanddicken erforderlich sein, so dass es ferner sinnvoll sein kann, die Polyelektrolytmenge an der Gesamtmenge der Monomere der Wand zu orientieren.

So beträgt die nach einer Ausführungsform bevorzugte Polyelektrolytmenge 10 bis 30 Gew.-% bezogen auf die Gesamtmenge der Monomere des Wandmaterials.

Nach einer anderen Ausführungsform beträgt die bevorzugte Polyelektrolytmenge 5 bis 15 Gew.-% bezogen auf die Gesamtmenge der Monomere des Wandmaterials. Unter Polyelektrolyten werden allgemein Polymere mit ionisierbaren oder ionisch dissoziierbaren Gruppen, die Bestandteil oder Substituent der Polymerkette sein können verstanden. Üblicherweise ist die Zahl dieser ionisierbaren oder ionisch dissoziierbaren Gruppen im Polyelektrolyten so groß, dass die Polymere in der ionischen Form (auch Polyionen genannt) wasserlöslich oder in Wasser quellbar sind. Bevorzugt werden Polyelektrolyte, die in Wasser bei 25 °C eine Löslichkeit von ≥ 4 g/l aufweisen, insbesondere Polyelektrolyte mit unbegrenzter Löslichkeit in Wasser. Bevorzugt werden Poly- , elektrolyte, die eine Elektrolytfunktionalität an jeder Wiederholungseinheit tragen.

Im Gegensatz zu Schutzkolloiden haben Polyelektrolyte in der Regel keine oder nur eine gering emulgierende Wirkung und haben häufig eine verdickende Wirkung. Im Rahmen der vorliegenden Erfindung haben Polyelektrolyte ein mittleres Molekulargewicht von 500 bis 10 000 000 g/mol, bevorzugt 1000 bis 100 000 g/mol, insbesondere 1 000 bis 10 000 g/mol. Es können lineare oder verzweigte Polyelektrolyte eingesetzt werden. Anders als die im Rahmen der vorliegenden Erfindung eingesetzten Schutzkolloide, die vor der Polymerisation zur Herstellung der ÖI-in-Wasser Emulsion zugegeben werden, sind Polyelektrolyte im Rahmen der vorliegenden Erfindung Polymere mit ionisierbaren oder ionisch dissoziierbaren Gruppen, die mit den Mikrokapseln - also nach erfolgter Polymerisation - in wässrigem Medium, vorzugsweise Wasser, in Kontakt gebracht werden. Unter wässrigem Medium sind dabei wässrige Mischungen zu verstehen, die bis zu 10 Gew.-% bezogen auf das wässrige Medium ein mit Wasser mischbares Lösungsmittel enthalten, welches in der gewünschten Einsatzmenge bei 25°C und 1 bar mit Wasser mischbar ist. Hierzu zählen Alkohole wie Methanol, Ethanol, Propanol, Isopropanol, Glykol, Glycerin und Methoxyethanol und wasserlösliche Ether wie Tetrahydrofuran und Dioxan sowie aprotische Zusätze wie Dimethylformamid oder Dimethylsulfoxid.

Je nach Art der dissoziierbaren Gruppen unterscheidet man kationische und anionische Polyelektrolyte (auch als Polyion bezeichnet). Betrachtet wird dabei die Ladung des Polyions (ohne Gegenion). Kationische Polyelektrolyte entstehen aus basischen Gruppen enthaltende Polymere (Polybasen) durch Anlagerung von Protonen oder Quaternierung.

Anionische Polyelektrolyte entstehen aus saure Gruppen enthaltenden Polymeren (Polysäuren) durch Abspaltung von Protonen.

Die Zuordnung des Polyelektrolyten erfolgt dabei nach der resultierenden Gesamtladung des Polyions (d.h. ohne Gegenion). Weist der Polyelektrolyt überwiegend positiv geladene, dissoziiert Gruppen auf, so handelt es sich um einen kationischen Polyelektrolyten. Weist er dagegen überwiegend negativ geladene Gruppen auf, so handelt es sich um einen anionischen Polyelektrolyten.

Bevorzugt werden ein oder mehrere kationische oder ein oder mehrere anionische Polyelektrolyte eingesetzt. Besonders bevorzugt werden ein oder mehrere kationische Polyelektrolyte gewählt. Man nimmt an, dass bei aufeinanderfolgender Zugabe von mehreren unterschiedlich geladenen Polyelektrolyten der Aufbau mehrerer Schichten erfolgt, sofern die Polyelektrolytmenge jeweils für den Aufbau einer Schicht ausreicht. In der Regel führt eine Polyelektrolytmenge von wenigsten 1 Gew.-% Polyelektrolyt bezogen auf das Gesamtgewicht der polyelektrolyttragenden Mikrokapseln zu einer Beschichtung. Bevorzugt wird jedoch nur eine Polyelektrolytschicht aufgebracht. Bei dieser Schicht kann es sich um einen oder eine Mischung mehrerer gleichgeladener Polyelektrolyte handeln.

Anionische Polyelektrolyte sind beispielsweise erhältlich durch radikalische Polymerisation von ethylenisch ungesättigten anionischen Monomeren in wässrigem Medium. Als ethylenisch ungesättigte anionische Monomere kommen beispielsweise monoethylenisch ungesättigte C₃- bis C₅-Carbonsäuren wie Acrylsäure, Methacrylsäure, Ethacrylsäure, Crotonsäure, Maleinsäure, Fumarsäure und Itaconsäure, Sulfonsäuren wie Vinylsulfonsäure, Styrolsulfonsäure und Acrylamidomethylpropansulfonsäure und Phosphonsäuren wie Vinylphosphonsäure, und/oder jeweils die Alkalimetall-, Erdalkalimetall- und/oder Ammoniumsalze dieser Säuren in Betracht.

Zu den bevorzugt eingesetzten, anionischen Monomeren gehören Acrylsäure, Methacrylsäure, Maleinsäure und Acrylamido-2-methylpropansulfonsäure. Besonders bevorzugt sind wässrige Dispersionen von Polymerisaten auf Basis von Acrylsäure. Die anionischen Monomere können entweder allein zu Homopolymerisaten oder auch in Mischung untereinander zu Copolymerisaten polymerisiert werden. Beispiele hierfür sind die Homopolymerisate der Acrylsäure, Homopolymerisate der Methacrylsäure oder Copolymerisate aus Acrylsäure und Maleinsäure, Copolymerisate aus Acrylsäure und Methacrylsäure sowie Copolymerisate aus Methacrylsäure und Maleinsäure.

Die Polymerisation der anionischen Monomere kann jedoch auch in Gegenwart mindestens eines anderen ethylenisch ungesättigten Monomeren durchgeführt werden. Diese Monomeren können nichtionisch sein oder aber eine kationische Ladung tragen. Beispiele für nichtionische Comonomere sind Acrylamid, Methacrylamid, N-C₁- bis C₃-Alkylacrylamide, N-Vinylformamid, Acrylsäureester von einwertigen Alkoholen mit 1 bis 20 C-Atomen wie insbesondere Methylacrylat, Ethylacrylat, Isobutylacrylat und n-Butylacrylat, Methacrylsäureester von einwertigen Alkoholen mit 1 bis 20 C-Atomen z. B. Methylmethacrylat und Ethylmethyacrylat, sowie Vinylacetat und Vinylpropionat.

Geeignete kationische Monomere, die mit den anionischen Monomeren copolymerisierbar sind, sind Dialkylaminoethylacrylate, Dialkylaminoethylmethacrylate, Dialkylaminopropylacrylate, Dialkylaminopropylmethacrylate, Dialkylaminoethylacrylamide, Dialkylaminoethylmethacrylamide, Dialkylaminopropylacrylamide, Dialkylaminopropylmethacrylamide, Diallyldimethylammoniumchlorid, Vinylimidazol sowie die jeweils mit Mineralsäuren neutralisierten und/oder quaternierten kationischen Monomere. Einzelne Beispiele für kationische Monomere sind Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat und Diethylaminopropylmethacrylat, Dimethyaminoethylacrylamid, Dimethylaminoethylmethacrylamid, Dimethylaminopropylacrylamid, Dimethylaminopropylmethacrylamid, Diethylaminoethylacrylamid und Diethylaminopropylacrylamid.

Die kationischen Monomere können vollständig oder auch nur teilweise neutralisiert bzw. quaterniert sein, z. B. jeweils zu 1 bis 99 %. Bevorzugt eingesetztes Quaternierungsmittel für die kationischen Monomere ist Dimethylsulfat. Man kann die Quaternierung der Monomere jedoch auch mit Diethylsulfat oder mit Alkylierungsmitteln, insbesondere Alkylhalogeniden wie Methylchlorid, Ethylchlorid oder Benzylchlorid durchführen. Die Comonomere werden bei der Herstellung der anionischen Polyelektrolyte beispielsweise in solchen Mengen eingesetzt, dass die entstehenden Polymerdispersionen beim Verdünnen mit Wasser und bei pH-Werten oberhalb von 7,0 und einer Temperatur von 20°C wasserlöslich sind und eine anionische Ladung aufweisen. Bezogen auf die bei der Polymerisation insgesamt eingesetzten Monomere beträgt die Menge an nichtionischen und/oder kationischen Comonomeren z. B. 0 bis 99, vorzugsweise 5 bis 75 Gew.-% und liegt meistens in dem Bereich von 5 bis 25 Gew.-%. Die kationischen Monomere werden dabei höchstens in einer Menge eingesetzt, dass die entstehenden Polyelektrolyte insgesamt bei pH-Werten < 6,0 und einer Temperatur von 20°C eine anionische Ladung tragen. Die anionische Überschussladung in den entstehenden amphoteren Polymeren beträgt z. B. mindestens 5 Mol-%, vorzugsweise mindestens 10 Mol-%, insbesondere mindestens 30 Mol-%, ganz besonders bevorzugt mindestens 50 Mol-%.

Beispiele für bevorzugte Copolymere sind Copolymerisate aus 25 bis 90 Gew.-% Acrylsäure und 75 bis 10 Gew.-% Acrylamid. Vorzugsweise polymerisiert man mindestens eine ethylenisch ungesättigte C₃- bis C₅-Carbonsäure in Abwesenheit von anderen monoethylenisch ungesättigten Monomeren. Besonders bevorzugt sind Homopolymerisate von Acrylsäure, die durch radikalische Polymerisation von Acrylsäure in Abwesenheit von anderen Monomeren erhältlich sind.

Als Vernetzer zur Herstellung verzweigter Polyelektrolyte können alle Verbindungen verwendet werden, die über mindestens zwei ethylenisch ungesättigte Doppelbindungen im Molekül verfügen. Solche Verbindungen werden beispielsweise bei der Herstellung vernetzter Polyacrylsäuren wie superabsorbierenden Polymeren eingesetzt, vgl. EP-A 0 858 478, Seite 4, Zeile 30 bis Seite 5, Zeile 43. Beispiele für Vernetzer sind Triallylamin, Pentaerythrittriallether, Pentaerythrittetraallylether, Methylenbisacrylamid, N,N'-Divinylethylenharnstoff, mindestens zwei Allylgruppen enthaltende Allylether oder mindestens zwei Vinylgruppen aufweisende Vinylether von mehrwertigen Alkoholen wie z. B. Sorbitol, 1,2-Ethandiol, 1,4-Butandiol, Trimethylolpropan, Glycerin, Diethylenglykol und von Zuckern wie Saccharose, Glucose, Mannose, vollständig mit Acrylsäure oder Methacrylsäure veresterte zweiwertige Alkohole mit 2 bis 4 C-Atomen wie Ethylenglykoldifnethacrylat, Ethylenglykoldiacrylat, Butandioldimethacrylat, Butandioldiacrylat, Diacrylate oder Dimethacrylate von Polyethylenglykolen mit Molekulargewichten von 300 bis 600, ethoxylierte Trimethylenpropantriacrylate oder ethoxylierte Trimethylenpropantrimethacrylate, 2,2-Bis(hydroxymethyl)butanoltrimethacrylat, Pentaerythrittriacrylat, Pentaerythrittetraacrylat und Triallylmethylammoniumchlorid. Falls bei der Herstellung der erfindungsgemäßen Dispersionen Vernetzer eingesetzt werden, so betragen die jeweils verwendeten Mengen an Vernetzer beispielsweise 0,0005 bis 5,0, vorzugsweise 0,001 bis 1,0 Gew.-%, bezogen auf die bei der Polymerisation insgesamt eingesetzten Monomere. Bevorzugt verwendete Vernetzer sind Pentaerythrittriallylether, Pentaerythrittetraallylether, N,N'-Divinylethylenharnstoff, mindestens zwei Allylgruppen enthaltende Allylether von Zuckern wie Saccharose, Glucose oder Mannose und Triallylamin sowie Mischungen dieser Verbindungen.

Als anionische Polyelektrolyte können weiterhin Polykondensate wie beispielsweise Phenolsulfonsäureharze eingesetzt werden. Geeignet sind Aldehyd-Kondensate, besonders auf Basis von Formaldehyd, Acetaldehyd, Isobutyraldehyd, Propionaldehyd, Glutaraldehyd und Glyoxal, ganz besonders Formaldehyd-Kondensate auf Basis von Phenolsulfonsäuren. Als weitere reagierende Verbindungen können beispielsweise Amine oder Amide, insbesondere solche der Kohlensäure wie beispielsweise Harnstoff, Melamin oder Dicyandiamid zur Herstellung der Phenolsulfonsäureharze mitverwendet werden.

Die Phenolsulfonsäureharze liegen vorzugsweise als Salze vor. Bevorzugt weisen die erfindungsgemäßen Kondensationsprodukte einen Kondensationsgrad von 1 bis 20 und ein mittleres Molekulargewicht von 500 - 10 000 g/mol auf. Die Herstellung der Phenolsulfonsäureharze erfolgt vorzugsweise analog der in der EP-A 816 406 angegebenen Weise.

Als kationische Polyelektrolyte kommen beispielsweise Polymere aus der Gruppe der
(a) Vinylimidazoliumeinheiten enthaltende Polymere,
(b) Polydiallyldimethylammoniumhalogenide,
(c) Vinylamineinheiten enthaltende Polymere,
(d) Ethylenimineinheiten enthaltende Polymere,
(e) Dialkylaminoalkylacrylat- und/oder Dialkylaminoalkylmethacrylateinheiten enthaltende Polymere und
(f) Dialkylaminoalkylacrylamid- und/oder Dialkylaminoalkylmethacrylamideinheiten enthaltende Polymere
in Betracht. Solche Polymere sind bekannt und im Handel erhältlich. Die den kationischen Polyelektrolyten der Gruppen (a)-(f) zugrunde liegenden Monomere können dabei in Form der freien Base, vorzugsweise jedoch in Form ihrer Salze mit Mineralsäuren wie Salzsäure, Schwefelsäure oder Phosphorsäure sowie in quaternierter Form zur Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht.

Beispiele für kationische Polyelektrolyte sind
(a) Homopolymerisate von Vinylimidazoliummethosulfat und/oder Copolymerisate aus Vinylimidazoliummethosulfat und N-Vinylpyrrolidon,
(b) Polydiallyldimethylammoniumchloride,
(c) Polyvinylamine sowie teilhydrolysierte Polyvinylformamide,
(d) Polyethylenimine
(e) Polydimethylaminoethylacrylat, Polydimethylaminoethylmethacrylat, Copolymerisate aus Acrylamid und Dimethylaminoethylacrylat und Copolymerisate aus Acrylamid und Dimethylaminoethylmethacrylat, wobei die basischen Monomeren auch in Form der Salze mit Mineralsäuren oder in quaternierter Form vorliegen können,und
(f) Polydimethylaminoethylacrylamid, Polydimethylaminoethylmethacrylamid und Copolymerisate aus Acrylamid und Dimethylaminoethylacrylamid, wobei die kationischen Monomere auch in Form der Salze mit Mineralsäuren oder in quaternierter Form vorliegen können.

Die mittleren Molmassen M_{w} der kationischen Polyelektrolyte betragen mindestens 500 g/mol. Sie liegen beispielsweise in dem Bereich von 500 g/mol bis 10 Millionen g/mol, vorzugsweise in dem Bereich von 1 000 bis 500 000 g/mol und meistens bei 1 000 bis 5 000 g/mol.

Vorzugsweise verwendet man als kationische Polymere
(a) Homopolymerisate von Vinylimidazoliummethosulfat und/oder Copolymerisaten aus Vinylimidazoliummethosulfat und N-Vinylpyrrolidon mit einer mittleren Molmasse M_{w} von jeweils 500 bis 10 000 g/mol,
(b) Polydiallyldimethylammoniumchloride mit einer mittleren Molmasse M_{w} von 1000 bis 10 000 g/mol,
(c) Polyvinylamine und teilhydrolysierte Polyvinylformamide mit einer mittleren Molmasse M_{w} von 500 bis 10 000 g/mol und
(d) Polyethylenimine mit einer mittleren Molmasse M_{w} von 500 bis 10 000 g/mol.

Die unter (a) aufgeführten Copolymerisate aus Vinylimidazoliummethosulfat und N-Vinylpyrrolidon enthalten beispielsweise 10 bis 90 Gew.-% N-Vinylpyrrolidon einpolymerisiert. Anstelle von N-Vinylpyrrolidon kann man als Comonomer mindestens eine Verbindung aus der Gruppe der ethylenisch ungesättigten C₃- bis C₅-Carbonsäuren wie insbesondere Acrylsäure oder Methacrylsäure oder die Ester dieser Carbonsäuren mit 1 bis 18 C-Atome enthaltenden einwertigen Alkoholen wie Ethylacrylat, Ethylacrylat, Isopropylacrylat, n-Butylacrylat, Isobutylacrylat, Methylmethacrylat, Ethylmethacrylat oder n-Butylmethacrylat einsetzen.

Als Polymere der Gruppe (b) kommt vorzugsweise Polydiallyldimethylammoniumchlorid in Betracht. Außerdem eignen sich Copolymerisate aus Diallyldimethylammoniumchlorid und Dimethylaminoethylacrylat, Copolymerisate aus Diallyldimethylammoniumchlorid und Dimethylaminoethylmethacrylat, Copolymerisate aus Diallyldimethylammoniumchlorid und Diethylaminoethylacrylat, Copolymerisate aus Diallyldimethylammoniumchlorid und Dimethylaminopropylacrylat, Copolymerisate aus Diallyldimethylammoniumchlorid und Dimethylaminoethylacrylamid und Copolymerisate aus Diallyldimethylammoniumchlorid und Dimethylaminopropylacrylamid. Die Copoylmerisate von Diallyldimethylammoniumchlorid enthalten beispielsweise 1 bis 50, meistens 2 bis 30 Mol-% mindestens eines der genannten Comonomeren einpolymerisiert.

Vinylamineinheiten enthaltende Polymere (c) sind erhältlich durch Polymerisieren von N-Vinylformamid gegebenenfalls in Gegenwart von Comonomeren und Hydrolyse der Polyvinylformamide unter Abspaltung von Formylgruppen unter Bildung von Aminogruppen. Der Hydrolysegrad der Polymeren kann beispielsweise 1 bis 100 % betragen und liegt bevorzugt in dem Bereich von 60 bis 100 %. Unter teilhydrolysierten Polyvinylformamiden ist im Rahmen dieser Anmeldung ein Hydrolysegrad von ≥ 50% bevorzugt von ≥ 90% zu verstehen. Die Herstellung von Homo- und Copolymerisaten von N-Vinylformamid sowie die Hydrolyse dieser Polymerisate unter Bildung von Vinylamineinheiten enthaltenden Polymeren wird beispielsweise in der US 6,132,558, Spalte 2, Zeile 36 bis Spalte 5, Zeile 25 ausführlich beschrieben. Die dort gemachten Ausführungen werden hiermit durch Bezugnahme zum Offenbarungsgehalt der vorliegenden Erfindung gemacht. Vinylamineinheiten enthaltende Polymere werden beispielsweise als Catiofast® und Polymin® Marken von BASF Aktiengesellschaft vertrieben.

Ethylenimineinheiten enthaltende Polymere der Gruppe (d) wie Polyethylenimine sind ebenfalls Handelsprodukte. Sie werden beispielsweise unter der Bezeichnung Polymin® von BASF Aktiengesellschaft verkauft z. B. Polymin® SK. Bei diesen kationischen Polymeren handelt es sich um Polymere von Ethylenimin, die durch Polymerisieren von Ethylenimin in wässrigem Medium in Gegenwart geringer Mengen an Säuren oder säurebildenden Verbindungen wie halogenierten Kohlenwasserstoffen z. B. Chloroform, Tetrachlorkohlenstoff, Tetrachlorethan oder Ethylchlorid hergestellt werden oder um Kondensationsprodukte aus Epichlorhydrin und Aminogruppen enthaltenden Verbindungen wie Mono- und Polyaminen z. B. Dimethylamin, Diethylamin, Ethylendiamin, Diethylentriamin und Triethylentetramin oder Ammoniak. Sie haben beispielsweise Molmassen M_{w} von 500 bis 1 Million, vorzugsweise 1000 bis 500 000 g/mol.

Zu dieser Gruppe von kationischen Polymeren gehören auch Pfropfpolyrrierisate von Ethylenimin auf Verbindungen, die eine primäre oder sekundäre Aminogruppe aufweisen, z. B. Polyamidoamine aus Dicarbonsäuren und Polyaminen. Die mit Ethylenimingepfropften Polyamidoamine können gegebenenfalls noch mit bifunktionellen Vernetzern umgesetzt werden, beispielsweise mit Epichlorhydrin oder Bis-chlorhydrinethem von Polyalkylenglykolen.

Als kationische Polymere der Gruppe (e) kommen Dialkylaminoalkylacrylat- und/oder Dialkylaminoalkylmethacrylateinheiten enthaltende Polymere in Betracht. Diese Monomeren können in Form der freien Basen, vorzugsweise jedoch in Form der Salze mit Mineralsäuren wie Salzsäure, Schwefelsäure oder Phosphorsäure sowie in quaternierter Form bei der Polymerisation eingesetzt werden. Als Quaternierungsmittel kommen beispielsweise Dimethylsulfat, Diethylsulfat, Methylchlorid, Ethylchlorid, Cetylchlorid oder Benzylchlorid in Betracht. Aus diesen Monomeren können sowohl Homopolymerisate als auch Copolymerisate hergestellt werden. Als Comonomere eignen sich beispielsweise Acrylamid, Methacrylamid, N-Vinylformamid, N-Vinylpyrrolidon, Methylacrylat, Ethylacrylat, Methylmethacrylat und Mischungen der genannten Monomeren.

Kationische Polymere der Gruppe (f) sind Dimethylaminoethylacrylamid- oder Dimethylaminoethylmethacrylamid-Einheiten enthaltende Polymerisate, die die kationischen Monomere vorzugsweise in Form der Salze mit Mineralsäuren oder in quaternierter Form enthalten. Hierbei kann es sich um Homopolymerisate und um Copolymerisate handeln. Beispiele sind Homopolymere von Dimethylaminoethylacrylamid, das mit Dimethylsulfat oder mit Benzylchlorid vollständig quaterniert ist, Homopolymere von Dimethylaminoethylmethacrylamid, das mit Dimethylsulfat, Methylchlorid, Ethylchlorid oder Benzylchlorid vollständig quaterniert ist sowie Copolymerisate aus Acrylamid und mit Dimethylsulfat quaterniertes Dimethylaminoethylacrylamid.

Außer solchen Polykationen, die allein aus kationischen Monomeren aufgebaut sind, können auch amphotere Polymere als kationische Polymere unter der Voraussetzung eingesetzt werden, dass sie insgesamt eine kationische Ladung tragen. Die kationische Überschussladung in den amphoteren Polymerisaten beträgt beispielsweise mindestens 5 Mol-%, vorzugsweise mindestens 10 Mol-% und liegt meistens in dem Bereich von 15 bis 95 Mol-%. Beispiele für amphotere Polymere mit einer kationischen Überschussladung sind
- Copolymerisate aus Acrylamid, Dimethylaminoethylacrylat und Acrylsäure, die mindestens 5 Mol-% mehr Dimethylaminoethylacrylat als Acrylsäure einpolymerisiert enthalten,
- Copolymerisate aus Vinylimidazoliummethosulfat, N-Vinylpyrrolidon und Acrylsäure, die mindestens 5 Mol-% mehr Vinylimidazoliummethosulfat als Acrylsäure einpolymerisiert enthalten,
- hydrolysierte Copolymerisate aus N-Vinylformamid und einer ethylenisch ungesättigten C₃- bis C₅-Carbonsäure, vorzugsweise Acrylsäure oder Methacrylsäure, mit einem um mindestens 5 Mol-% höheren Gehalt an Vinylamineinheiten als Einheiten an ethylenisch ungesättigten Carbonsäuren
- Copolymerisate aus Vinylimidazol, Acrylamid und Acrylsäure, wobei der pH-Wert so gewählt ist, dass mindestens 5 Mol% mehr Vinylimidazol kationisch geladen ist als Acrylsäure einpolymerisiert ist.

Erfindungsgemäß geeignete Polyelektrolyte können ferner Biopolymere, wie Alginsäure, Gummi arabicum, Nucleinsäuren, Pektine, Proteine, sowie chemisch modifizierte Biopolymere, wie ionische oder ionisierbare Polysaccharide, z. B. Carboxymethylcellulose, Chitosan, Chitosansulfat, und Ligninsulfonat sein.

Bevorzugt wird der Polyelektrolyt ausgewählt aus der Gruppe umfassend Polyacrylsäuren, Phenolsulfonsäurepräkondensate, Polydiallyldimethylammoniumchloride, Polyvinylamine, teilhydrolysierte Polyvinylformamide und Polyethylenimin.

Nach einer Ausführungsform werden anionische Polyelektrolyte bevorzugt, insbesondere der Polyacrylsäuren und Phenolsulfonsäureharze.

Nach einer Ausführungsform werden kationische Polyelektrolyte bevorzugt, insbesondere der Gruppen (b), (c) und (d), also Polydiallyldimethylammoniumchloride, Polyvinylamine und teilhydrolysierte Polyvinylformamide und Polyethylenimine. Besonders bevorzugt werden als kationische Polyelektrolyte Polydiallyldimethylammoniumchloride eingesetzt.

Polyelektrolytmodifizierte Mikrokapseln werden erhalten, indem man die Mikrokapseln oder bevorzugt eine Mikrokapseldispersion mit einem oder mehreren Polyelektrolyten gegebenenfalls in Wasser oder einem wässrigen Medium in Kontakt bringt.

Es werden Mikrokapseln bevorzugt, die polyelektrolytmodifiziert sind, eine mittleren Teilchengröße von 1,5 - 2,5 µm haben und von denen 90 % der Teilchen eine Teilchengröße ≤ 4 µm haben sowie die Kombination der bevorzugten Ausführungsformen. Sie werden erhalten, indem man Mikrokapseln umfassend einen Kapselkern und eine Kapselwand aufgebaut aus
- 30 bis 90 Gew.-%: eines oder mehrerer C₁-C₂₄-Alkylester der Acryl- und/oder Methacrylsäure, Acrylsäure, Methacrylsäure und/oder Maleinsäure bevorzugt eines oder mehrerer C₁-C₂₄-Alkylester der Acryl- und/oder Methacrylsäure (Monomere I),
- 10 bis 70 Gew.-%: einer Mischung aus Divinyl- und Polyvinylmonomeren (Monomere II), wobei der Anteil der Polyvinylmonomere 2 bis 90 Gew.-% bezogen auf die Monomere II beträgt sowie
- 0 bis 30 Gew.-%: sonstige Monomere (Monomer III)
jeweils bezogen auf das Gesamtgewicht der Monomer, wobei die Mikrokapseln eine mittleren Teilchengröße von 1,5 - 2,5 µm haben und 90 % der Teilchen eine Teilchengröße ≤ 4 µm haben, mit einem oder mehreren Polyelektrolyten in Wasser oder einem wässrigem Medium in Kontakt bringt. Vorzugsweise bringt man eine Mikrokapseldispersion mit einem oder mehreren Polyelektrolyten in Kontakt.

Vorzugsweise werden sie erhalten, indem man
a) eine ÖI-in-Wasser-Emulsion, enthaltend die Monomere, die lipophile Substanz und Polyvinylalkohol und/oder teilhydrolysiertes Polyvinylacetat herstellt, wobei die mittlere Größe der Öltröpfchen 1,5 - 2,5 µm beträgt,
b) die Monomere der nach a) erhaltenen ÖI-in-Wasser-Emulsion radikalisch polymerisiert und die Mikrokapseln gegebenenfalls isoliert
c) die nach b) erhaltenen Mikrokapseln oder Mikrokapseldispersion mit einem oder mehreren Polyelektrolyten gegebenenfalls in Wasser oder einem wässrigen Medium in Kontakt bringt.

Der Polyelektrolyt wird dabei der Ausgangsmikrokapseldispersion in Substanz oder in Lösung vorzugsweise als wässrige Lösung zudosiert. Die Polyelektrolytmenge beträgt dabei 0,1 bis 5 Gew.-%, bevorzugt 0,25 bis 1,5 Gew.-% bezogen auf die Ausgangsmikrokapsel menge.

Die erfindungsgemäßen Mikrokapseln können gegebenenfalls anschließend durch Sprühtrocknung isoliert werden. Durch den Verfahrensschritt der radikalischen Polymerisation b) entsteht eine Ausgangsmikrokapseldispersion als Zwischenprodukt, die in Schritt c) mit dem Polyelektrolyt in Kontakt gebracht wird. Die Teilchengrößenverteilung der polyelektrolyt-modifizierten Mikrokapseldispersion ist dabei unverändert zur Ausgangsmikrokapseldispersion. Bevorzugt wird die aus Verfahrensschritt b) erhaltene Mikrokapseldispersion mit einem oder mehreren Polyelektrolyten in Kontakt gebracht, also ohne Zwischenisolierung der Mikrokapseln. Da in diesem Fall eine wässrige Dispersion vorliegt, hat man bereits das gewünschte Medium, in dem die Mikrokapseln und der Polyelektrolyt in Kontakt gebracht werden können. Unter in Kontakt bringen ist beispielsweise Mischen mit üblichen Rührern oder Mischern zu verstehen.

Die erfindungsgemäßen Mikrokapseln lassen sich direkt als wässrige Mikrokapseldispersion oder in Form eines Pulvers verarbeiten. Die Mikrokapseln weisen bei der Verarbeitung im Textilbereich eine gute chemische Reinigungsbeständigkeit sowie gute Abdampfraten auf. Ferner haben sie gute fogging-Werte.

Die Anwendung des erfindungsgemäßen Mikrokapselpulvers ist vielfältig. So lässt es sich vorteilhaft zur Modifizierung von Fasern und Textilerzeugnissen beispielsweise von Textilgeweben und Nonwovens (z.B. Vliesstoffe) usw. einsetzen. Als Applikationsformen sind hierbei insbesondere Mikrokapselbeschichtungen, Schäume mit Mikrokapseln und mikrokapselmodifzierte Textilfasern zu nennen. Für Beschichtungen werden die Mikrokapseln zusammen mit einem polymeren Bindemittel und gegebenenfalls anderen Hilfsstoffen, in der Regel als Dispersion, auf ein Textilerzeugnis aufgebracht. Übliche Textilbindemittel sind filmformende Polymere mit einer Glasübergangstemperatur im Bereich von -45 bis 45°C vorzugsweise -30 bis 12°C. Die Herstellung solcher Mikrokapselbeschichtungen wird beispielsweise in der WO 95/34609 beschrieben auf die ausdrücklich Bezug genommen wird. Die Modifizierung von Schäumen mit Mikrokapseln erfolgt in ähnlicher Weise, wie in der DE 981576T und der US 5,955,188 beschrieben. Das vorgeschäumte Substrat, vorzugsweise ein Polyurethan oder Polyether, wird mit einer bindemittelhaltigen Mikrokapseldispersion oberflächenbehandelt. Anschließend gelangt die Bindemittel-Mikrokapsel-Mischung durch Anlegen von Vakuum in die offenporige Schaumstruktur, in der das Bindemittel aushärtet und die Mikrokapseln an das Substrat bindet. Eine weitere Verarbeitungsmöglichkeit ist die Modifizierung der Textilfasern selbst, z.B. durch Verspinnen aus einer Schmelze oder einer wässrigen Dispersion wie in der US 2002/0054964 beschrieben. Schmelzspinnverfahren werden dabei für Nylon-, Polyester-, Polypropylenfasern und ähnliche Fasern eingesetzt während das Nassspinnverfahren vor allem zur Herstellung von Acrylfasern dient.

Ein weiteres breites Anwendungsfeld sind Bindebaustoffen mit mineralischen, silikatischen oder polymeren Bindemitteln. Man unterscheidet dabei zwischen Formkörpern und Beschichtungsmassen. So zeichnen sie sich durch ihre Hydrolysestabilität gegenüber den wässrigen und oft alkalisch wässrigen Materialien aus.

Unter einem mineralischen Formkörper wird ein Formkörper verstanden, der aus einem Gemisch aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton, Lehm und/oder Zement, die durch Anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigen.

Die Zuschläge bestehen in der Regel aus körnigem oder faserförmigem natürlichem oder künstlichem Gestein (Kies, Sand, Glas- oder Mineralfasern), in Sonderfällen auch aus Metallen oder organischen Zuschlägen oder aus Gemischen der genannten Zuschläge, mit Korngrößen oder Faserlängen, die dem jeweiligen Verwendungszweck in an sich bekannter Weise angepasst sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z. B. aus der US-A 4,340,510, der GB-PS 1 505 558, der US-A 3,196,122, der US-A 3,043,790, der US-A 3,239,479, der DE-A 43 17 035, der DE-A 43 17 036, der JP-A 91/131 533 und anderen Schriften bekannt sind.

Die erfindungsgemäßen Mikrokapseln eignen sich zur Modifikation von mineralischen Bindebaustoffen (mörtelartige Zubereitungen), die ein mineralisches Bindemittel enthalten, das aus 70 bis 100 Gew.-% Zement und 0 bis 30 Gew.-% Gips besteht. Dies gilt insbesondere dann, wenn Zement das alleinige mineralische Bindemittel ist. Die erfindungsgemäße Wirkung ist dabei von der Zementart im wesentlichen unabhängig. Je nach Vorhaben können also Hochofenzement, Ölschieferzernent, Portlandzement, hydrophobierter Portlandzement, Schnellzement, Quellzement oder Tonerdezement verwendet werden, wobei sich die Verwendung von Portlandzement als besonders günstig erweist. Bezüglich weiterer Details sei auf die DE-A 196 23 413 verwiesen. In typischer Weise enthalten die Trockenzusammensetzungen mineralischer Bindebaustoffe, bezogen auf die Menge an mineralischem Bindemittel, 0,1 bis 20 Gew.-% Mikrokapseln.

Bevorzugt werden die erfindungsgemäßen Mikrokapseln als Zusatz in mineralischen Beschichtungsmassen wie Putz angewendet. Ein solcher Putz für den Innenbereich setzt sich üblicherweise aus Gips als Bindemittel zusammen. In der Regel beträgt das Gewichtsverhältnis Gips/Mikrokapsel von 95 : 5 bis 70 : 30. Höhere Mikrokapselanteile sind natürlich möglich.

Beschichtungen für den Außenbereich wie Außenfassaden oder Feuchträume können Zement (zementöse Putze), Kalk oder Wasserglas (mineralische oder Silikat-Putze) oder Kunststoffdispersionen (Kunstharzputze) als Bindemittel zusammen mit Füllstoffen und gegebenenfalls Pigmenten zur Farbgebung enthalten. Der Anteil der Mikrokapseln am Gesamtfeststoff entspricht den Gewichtsverhältnissen für Gipsputze.

Ferner eignen sich die erfindungsgemäßen Mikrokapseln als Zusatz in polymeren Formkörpern oder polymeren Beschichtungsmassen. Hierunter sind thermoplastische und duroplastische Kunststoffe zu verstehen, bei deren Verarbeitung die Mikrokapseln nicht zerstört werden. Beispiele sind Epoxy-, Harnstoff-, Melamin-, Polyurethan und Silikonharze und auch Lacke sowohl auf Lösungsmittelbasis, High-Solid-Basis, Pulverlack oder Wasserbasislack und Dispersionsfilme. Geeignet ist das Mikrokapselpulver auch zur Einarbeitung in Kunststoffschäume und Fasern. Beispiele für Schäume sind Polyurethanschaum, Polystyrolschaum, Latexschaum und Melaminharzschaum.

Ferner eignen sich die erfindungsgemäßen Mikrokapseln als Zusatz in lignocellulosehaltigen Formkörpern, wie Spanplatten.

Vorteilhafte Effekte können ferner erzielt werden, wenn die erfindungsgemäßen Mikrokapseln in mineralischen Formkörpern verarbeitet werden, die geschäumt werden.

Ferner eignet sich die erfindungsgemäßen Mikrokapseln zur Modifizierung von Gipskartonplatten. Dabei werden bevorzugt 5 bis 40 Gew.-%, insbesondere 20 bis 35 Gew.-%, Mikrokapselpulver bezogen auf das Gesamtgewicht der Gipskartonplatte (Trockensubstanz) eingearbeitet. Die Herstellung von Gipskartonplatten mit mikroverkapselten Latentwärmespeichern ist allgemein bekannt und in der EP-A 1 421 243 beschrieben auf die ausdrücklich Bezug genommen wird. Dabei können anstelle von Karton aus Cellulosebasis auch alternative, faserartige Gebilde als beidseitige Abdeckungen für die "Gipskärtonplatte" verwendet werden. Alternative Materialien sind Polymerfasern aus z. B. Polypropylen, Polyester, Polyamid, Polyacrylaten, Polyacrylnitril und dergleichen. Auch Glasfasern sind geeignet. Die alternativen Materialien können als Gewebe und als sogenannte "nonwovens", also als vliesartige Gebilde eingesetzt werden. Derartige Bauplatten sind beispielsweise aus der US 4,810,569, US 4,195,110 und US 4,394,411 bekannt.

Ferner eignen sich die erfindungsgemäßen Mikrokapseln zur Herstellung von Wärmeträgerflüssigkeit. Unter dem Begriff Wärmeträgerflüssigkeit sind im Rahmen dieser Anmeldung sowohl Flüssigkeiten für den Wärmetransport als auch Flüssigkeiten für den Kältetransport, also Kühlflüssigkeiten, gemeint. Das Prinzip der Übertragung von Wärmeenergie ist in beiden Fällen gleich und unterscheidet sich lediglich in der Übertragungsrichtung.

Die nachfolgenden Beispiele sollen die Erfindung näher erläutern. Bei den Prozentangaben in den Beispielen handelt es sich um Gewichtsprozent sofern nicht anders angegeben.

Die Teilchengröße des Mikrokapselpulvers wurde mit einem Malvern Particle Sizer Typ 3600E gemäß einer Standardmessmethode bestimmt, die in der Literatur dokumentiert ist. Der D(0,1) Wert besagt, dass 10 % der Teilchen eine Teilchengröße (nach dem Volumenmittel) bis zu diesem Wert haben. Entsprechend bedeutet D(0,5), dass 50 % der Teilchen eine Teilchengröße (nach dem Volumenmittel) kleiner/gleich diesem Wert haben. Der Span-Wert ergibt sich aus dem Quotienten aus der Differenz (D(0,9) - D(0,1)) und D(0,5).

### Bestimmung der Abdampfrate

Zur Vorbehandlung wurden 2 g der Mikrokapseldispersion in einem Metallschälchen zwei Stunden lang bei 105°C getrocknet, um etwaiges Restwasser zu entfernen. Dann wurde das Gewicht (mₒ) ermittelt. Nach einstündigem Erhitzen auf 180°C wird nach abkühlen erneut das Gewicht (m₁) ermittelt. Die Gewichtsdifferenz (mo - m₁) bezogen auf mo und multipliziert mit 100 gibt die Abdampfrate in % an. Je kleiner der Wert, desto dichter sind die Mikrokapseln. Dabei ist zu beachten, dass Vergleiche in der Abdampfrate immer bei vergleichbaren Kapselgrößen und Stabilisatorsystemen durchgeführt werden sollten.

### Herstellung der Mikrokapseldispersion

### Beispiele 1 a und 1b: Kapseln stabilisiert durch anorganische Pickering Systeme

### Beispiel 1a (nicht erfindungsgemäß)

Wasserphase
- 630 g: Wasser
- 110 g: einer 50%igen kolloidalen Dispersion von SiO₂ in Wasser bei pH 9,2 (Teilchengröße ca. 80-100nm)
- 20,0 g: einer 1 gew.-%igen wässrigen Lösung von Methylhydroxyethylcellulose (Culminal® MHEC 15000 PFR)
- 2,1 g: einer 2,5 gew.-%igen wässrigen Natriumnitritlösung

### Ölphase

| | |
|---|---|
| 431 g | techn. Paraffin-Schnitt, C₁₆-C₁₈ (ca. 92% C₁₈) |
| 9 g | Sasolwax 6805 (höherschmelzendes Paraffin) |
| 82,5 g | Methylmethacrylat (MMA) |
| 27,5 g | Butandioldiacrylat (BDA₂) |
| 0,76g | Ethylhexylthioglycolat |
| 0,92 g | einer 75 gew.-%igen Lösung von tert-Butylperpivalat in aliphatischen Kohlenwasserstoffen |

### Zugabe 1

| | |
|---|---|
| 7,65 g | einer 10 gew.-%igen wässrigen Lösung von tert-Butylhydroperoxid |

### Zulauf 1

| | |
|---|---|
| 28,34 g | einer 1,1 gew.-%igen wässrigen Lösung von Ascorbinsäure |

a) Die Wasserphase wurde vorgelegt und mit 20% gew.-%iger Schwefelsäure auf einen pH-Wert von 2,5 eingestellt. Bei 40 °C wurde die Ölphase zugegeben und mit einem schnelllaufenden Dissolverrührer bei 3500 Upm für 40 Minuten dispergiert. Es wurde eine stabile Emulsion erhalten.
b) Die Emulsion wurde unter Rühren mit einem Ankerrührer über einen Zeitraum von 60 Minuten auf 67°C erwärmt, innerhalb von weiteren 60 Minuten auf eine Temperatur von 85 °C erwärmt und bei dieser Temperatur eine Stunde gehalten. Es wurde Zugabe 1 zugegeben und die entstandene Mikrokapseldispersion innerhalb von 30 Minuten unter Rühren auf 20°C gekühlt, während Zulauf 1 über einen Zeitraum von 80 Minuten zudosiert wurde.

Es wurde eine Mikrokapseldispersion mit einem Feststoffgehalt von 43,8 Gew.-% und einer mittleren Teilchengröße von D[4,3] = 8,34 µm, Span = 0,98 erhalten. Die Abdampfrate lag bei 70,6%, der Fogging-Wert bei 1,3 mg / g.

### Beispiel 1 b

Es wurde analog Beispiel 1a gearbeitet, wobei 50 Gew.-% des Butandioldiacrylats durch Pentaeritrit-Tetraacrylat (PETIA) ersetzt wurde.
Es wurde eine Mikrokapseldispersion mit einem Feststoffgehalt von 39,3 Gew.-% und einer mittleren Teilchengröße von D[4,3] = 5,82 µm, Span = 1,01 erhalten. Die Abdampfrate lag bei 64,6%.

### Beispiele 2a-2e

### Wasserphase

| | |
|---|---|
| 380 g | Wasser |
| 190 g | einer 5 gew.-%igen wässrigen Dispersion von Methylhydroxypropylcellulose (Culminal® MHPC 100) |
| 47,5 g | einer 10 gew.-%igen wässrigen Polyvinylalkohollösung (Mowiol 15-79) |
| 2,1 g | einer 2,5 gew.-%igen wässrigen Natriumnitritlösung |

### Ölphase

| | |
|---|---|
| 431 g | techn. Octadecan, (95 gew.-%iger Reinheit) |
| 9 g | Sasolwax 6805 (höherschmelzendes Paraffin) |
| 19,6 g | Methylmethacrylat |
| 19,6 g | VERNETZERMISCHUNG, s. Tabelle 1 |
| 9,8 g | Methacrylsäure |
| 0,7 g | einer 75 gew.-%igen Lösung von tert-Butylperpivalat in aliphatischen Kohlenwasserstoffen |

### Zugabe 1

| | |
|---|---|
| 5,38 g | einer 10 gew.-%igen wässrigen Lösung von tert-Butylhydroperoxid |

### Zulauf 1

| | |
|---|---|
| 28,3 g | einer 1,1 gew.-%igen wässrigen Lösung von Ascorbinsäure |

a) Bei 40 °C wurde die obige Wasserphase vorgelegt und nach Zugabe der Ölphase wurde mit einem schnelllaufenden Dissolverrührer bei 3500 Upm dispergiert. Nach 40 Minuten Dispergierung wurde eine stabile Emulsion erhalten.
b) Die Emulsion wurde unter Rühren mit einem Ankerrührer über einen Zeitraum von 60 Minuten auf 70°C erwärmt, innerhalb von weiteren 60 Minuten auf eine Temperatur von 85 °C erwärmt und bei dieser Temperatur eine Stunde gehalten. Es wurde Zugabe 1 zugegeben und die entstandene Mikrokapseldispersion unter Rühren innerhalb von 30 Minuten auf 20°C gekühlt, während Zulauf 1 zudosiert wurde.

Die Charakteristika der erhaltenen Mikrokapseldispersionen sind Tabelle 1 zu entnehmen. Die Mikrokapseln hatten eine mittlere Teilchengröße von D[4,3] = 3-5 µm

**Tabelle 1: Mikrokapseln mit unterschiedlichen Vernetzermischungen**

| Beispiel | Vernetzermischung | | D[4,3] [µm] | Span | Feststoffgehalt [%] | Abdampfrate [%] |
|---|---|---|---|---|---|---|
| | BDA₂ [Gew.-%] | PETIA [Gew.-%] | | | | |
| 2a | 100 | 0 | 4,58 | 1,01 | 44,0 | 11,3 |
| 2b | 95 | 5 | 3,48 | 0,84 | 42,6 | 6,7 |
| 2c | 87,5 | 12,5 | 3,58 | 1,12 | 43,1 | 3,9 |
| 2d | 75 | 25 | 3,76 | 0,91 | 43,4 | 3,9 |
| 2e | 0 | 100 | 3,66 | 0,94 | 43,2 | 30,4 |

| | | | | | | |
|---|---|---|---|---|---|---|
| BDA₂: Butandioldiacrylat PETIA: Pentaeritrit-tetraacrylat | | | | | | |

Die Beispiele 2a und 2e sind nicht erfindungsgemäß.

### Beispiele 3a-3h

### Wasserphase

| | |
|---|---|
| 425 g | Wasser |
| 412 g | einer 10 gew.-%igen wässrigen Polyvinylalkohollösung (Mowiol 40-88) |
| 2,1 g | einer 2,5 gew.-%igen wässrigen Natriumnitritlösung |

### Ölphase

| | |
|---|---|
| 431 g | techn. Paraffin-Schnitt, C₁₆-C₁₈(ca. 92% C₁₈) |
| 9 g | Sasolwax 6805 (höherschmelzendes Paraffin |
| 77,6 g | MONOMER-MISCHUNG, gemäß Tabelle 2 |
| 0,76 g | Ethylhexylthioglycolat |
| 0,7 g | einer 75 gew.-%igen Lösung von tert-Butylperpivalat in aliphatischen Kohlenwasserstoffen |

### Zugabe 1

| | |
|---|---|
| 5,38 g | einer 10 gew.-%igen wässrigen tert-Butylhydroperoxidlösung, |

### Zulauf 1

| | |
|---|---|
| 28,3 g | einer 1,1 gew.-%igen wässrigen Ascorbinsäurelösung |

### Zugabe 2

| | |
|---|---|
| 1,00 g | 25 %ige Natronlauge |
| 1,43 g | Wasser |

a) Bei 70 °C wurde die obige Wasserphase vorgelegt und nach Zugabe der Ölphase wurde mit einem schnelllaufenden Dissolverrührer bei 6000 Upm dispergiert. Nach 40 Minuten Dispergierung wurde eine stabile Emulsion der mittlerenTeilchengröße D[4,3]=2,3 µm Durchmesser erhalten.
b) Die Emulsion wurde unter Rühren mit einem Ankerrüher 60 Minuten auf 70°C gehalten, innerhalb von weiteren 60 Minuten auf 85 °C erwärmt und bei dieser Temperatur eine Stunde gehalten. Es wurde Zugabe 1 zugegeben und die entstandene Mikrokapseldispersion innerhalb von 30 Minuten unter Rühren auf 20°C gekühlt, während Zulauf 1 dazugegeben wurde. Es wurde Zugabe 2 zugegeben, um den pH-Wert auf 7 einzustellen.

Die Charakteristika der erhaltenen Mikrokapseldispersionen sind in Tabelle 2 beschrieben.

**Tabelle 2: Abdampfraten bei unterschiedlichen Monomermischungen (Monomerangäben sind in Gew.-%)**

| Beispiel | 3a (Vergleich) | 3b | 3c | 3d | 3e | 3f | 3g | 3h |
|---|---|---|---|---|---|---|---|---|
| Monomer-Mischung | | | | | | | | |
| Monomere Ia | 65% MMA | 65% MMA | 65% MMA | 65% MMA | 65% MMA | 45% MMA | 25% MMA | 5% MMA |
| Monomere 1b | 10% MAS | 10% MAS | 10% MAS | 10% MAS | 10% MAS | 30% MAS | 50% MAS | 70 % MAS |
| Monomere II | 25% BDA₂ | 20% BDA₂ | 15% BDA₂ | 10% BDA₂ | | 15% BDA₂ | 15% BDA₂ | 15% BDA₂ |
| | 0% PETIA | 5% PETIA | 10% PETIA | 15% PETIA | 20% PETIA | 10% PETIA | 10% PETIA | 10% PETIA |
| Verhältnis BDA₂ / PETIA | 100/0 | 80/20 | 60/40 | 40/60 | 20/80 | 60/40 | 60/40 | 60/40 |
| D[4,3] [µm] | 2,06 | 2,04 | 1,94 | 1,91 | 1,87 | 1,8 | 1,94 | 2,3 |
| Span | 0,35 | 0,35 | 0,34 | 0,35 | 0,30 | 0,25 | 0,35 | 0,3 |
| Feststoffgehalt [%] | 40,6 | 40,0 | 40,1 | 40,1 | 40,8 | 40,1 | 40,5 | 40,7 |
| Abdampfrate [%] | 22,7 | 7,0 | 6,3 | 8,3 | 9,7 | 2,4 | 7,2 | 2,8 |
| Abdampfrate ¹⁾[%] | 3,6 | 1,8 | 2,2 | 2,0 | 1,9 | 1,2 | 4,4 | 2,1 |

| | | | | | | | | |
|---|---|---|---|---|---|---|---|---|
| MMA: Methylmethacrylat BDA₂: Butandiacrylat PETIA: Pentaeritrittetraacrylat MAS: Methacrylsäure ¹⁾ Von den Mikrokapseldispersionen der Beispiele 3a- 3h wurde je eine Probe mit einer 50 gew.-%igen wässrigen Lösung eines Phenolsulfonsäure-Formaldehyd-Harzes (M_{w} = 7000 g/mol), Menge: 1Gew.-% Harz_{fest}/Mikrokapseln_{fest}) versetzt und anschließend die Abdampfrate bestimmt | | | | | | | | |

## Patentansprüche

1. Mikrokapsein umfassend einen Kapselkern und eine Kapselwand, wobei die Kapselwand aufgebaut ist aus
30 bis 90 Gew.-% eines oder mehrerer C₁-C₂₄-Alkylester der Acryl- und/oder Methacrylsäure, Acrylsäure, Methacrylsäure und/oder Maleinsäure (Monomere I),
10 bis 70 Gew.-% einer Mischung aus Divinyl- und Polyvinylmonomeren (Monomere II), wobei der Anteil der Polyvinylmonomere 2 bis 90 Gew.-% bezogen auf die Monomere **II** beträgt sowie
0 bis 30 Gew.-% eines oder mehrerer sonstiger Monomere (Monomer III)
jeweils bezogen auf das Gesamtgewicht der Monomer.

2. Mikrokapsein nach einem der Anspruch 1, wobei die Mikrokapseln eine mittleren Teilchengröße von 1,5 - 2,5 µm haben und 90 % der Teilchen eine Teilchengröße ≤ 4 µm haben.

3. Mikrokapsein nach Anspruch 1 oder 2, wobei der Anteil der Polyvinylmonomeren 5 bis 80 Gew.-% bezogen auf die Summe aus Divinyl- und Polyvinylmonomerenbeträgt.

4. Mikrokapseln nach einem der Ansprüche 1 bis 3, wobei das Polyvinylmonomer ausgewählt wird aus der Gruppe umfassend Trimethylolpropantriacrylat und - methacrylat, Pentaerythrittriallylether, Pentaerythrittetraallylether, Pentaerythrittriacrylat und Pentaerythrittetraacrylat.

5. Mikrokapseln nach einem der Ansprüche 1 bis 3, wobei der Kapselkern eine lipophile Substanz mit einem fest/flüssig Phasenübergang im Temperaturbereich von -20 bis 120 °C ist.

6. Mikrokapseln nach einem der Ansprüche 1 bis 5, wobei zusätzlich auf der äußeren Oberfläche der Kapselwand Polyelektrolyte mit einem mittleren Molekulargewicht von 500 g/mol bis 10 Millionen g/mol angeordnete sind.

7. Mikrokapseln nach einem der Ansprüche 1 bis 6, wobei die Polyelektrolytmenge 0,1 bis 10 Gew.-% bezogen auf das Gesamtgewicht der polyelektrolyttragenden Mikrokapseln beträgt.

8. Mikrokapsein nach einem der Ansprüche 1 bis 7 in Form einer wässrigen Dispersion.

9. Verfahren zur Herstellung von Mikrokapseln gemäß den Ansprüche 1 bis 11, umfassend einen Kapselkern und eine Kapselwand, wobei die Kapselwand auf gebaut ist aus
30 bis 90 Gew.-% eines oder mehrerer C₁-C₂₄-Alkylester der Acryl- und/oder Methacrylsäure (Monomere I),
10 bis 70 Gew.-% einer Mischung aus Divinyl- und Polyvinylmonomeren (Monomere II), wobei der Anteil der Polyvinylmonomere 2 bis 90 Gew.-% bezogen auf die Monomere II beträgt sowie
0 bis 30 Gew.-% sonstige Monomere (Monomer III)
jeweils bezogen auf das Gesamtgewicht der Monomer, indem man einer Öl-in-Wasser-Emulsion, in der die Monomere, ein Radikalstarter und die lipophile Substanz als disperse Phase vorliegen erwärmt.

10. Verfahren zur Herstellung von Mikrokapseln nach Anspruch 9, indem man
a) eine ÖI-in-Wasser-Emulsion, enthaltend die Monomere, die lipophile Substanz und Polyvinylalkohol und/oder teilhydrolysiertes Polyvinylacetat herstellt, wobei die mittlere Größe der Öltröpfchen 1,5 - 2,5 µm beträgt, und
b) die Monomere der nach a) erhaltenen ÖI-in-Wasser-Emulsion radikalisch polymerisiert.

11. Verfahren zur Herstellung von Mikrokapseln nach Anspruch 9 oder 10, indem man die Mikrokapseldispersion mit einem oder mehreren Polyelektrolyten in Kontakt bringt

12. Verwendung der Mikrokapseln gemäß den Ansprüchen 1 bis 8 als Latentwärmespeicher zur Einarbeitung in Textilien.

13. Verwendung der Mikrokapseln gemäß den Ansprüchen 1 bis 8 als Latentwärmespeicher in Bindebaustoffen.

14. Verwendung der Mikrokapseldispersion gemäß Anspruch 8 als Latentwärmespeicher in Wärmeträgerflüssigkeiten.

## Claims

1. Microcapsules comprising a capsule core and a capsule wall, the capsule wall being constructed from
30% to 90% by weight of one or more C₁-C₂₄-alkyl esters of acrylic and/or methacrylic acid, acrylic acid, methacrylic acid and/or maleic acid (monomers I),
10% to 70% by weight of a mixture of divinyl and polyvinyl monomers (monomers II), the fraction of polyvinyl monomers being in the range from 2% to 90% by weight based on the monomers II, and also
0% to 30% by weight of one or more miscellaneous monomers (monomer III),
all based on the total weight of the monomer.

2. The microcapsules according to any one of the claim 1 wherein the microcapsules have an average particle size of 1.5-2.5 µm and 90% of the particles have a particle size ≤ 4 µm.

3. The microcapsules according to claim 1 or 2 wherein the fraction of the polyvinyl monomers is in the range from 5% to 80% by weight based on the sum total of divinyl and polyvinyl monomers.

4. The microcapsules according to any one of the claims 1 to 3 wherein the polyvinyl monomer is selected from the group comprising trimethylolpropane triacrylate, trimethylolpropane trimethacrylate, pentaerythritol triallyl ether, pentaerythritol tetraallyl ether, pentaerythritol triacrylate and pentaerythritol tetraacrylate.

5. The microcapsules according to any one of the claims 1 to 3 wherein the capsule core is a lipophilic substance having a solid/liquid phase transition in the temperature range from -20 to 120°C.

6. The microcapsules according to any one of the claims 1 to 5 wherein additionally polyelectrolytes having an average molecular weight in the range from 500 g/mol to 10 million g/mol are disposed on the outer surface of the capsule wall.

7. The microcapsules according to any one of the claims 1 to 6 wherein the polyelectrolyte quantity is in the range from 0.1% to 10% by weight based on the total weight of the polyelectrolyte-bearing microcapsules.

8. The microcapsules according to any one of the claims 1 to 7 in the form of an aqueous dispersion.

9. A process for producing microcapsules according to claims 1 to 11, comprising a capsule core and a capsule wall, the capsule wall being constructed from
30% to 90% by weight of one or more C₁-C₂₄-alkyl esters of acrylic and/or methacrylic acid (monomers I),
10% to 70% by weight of a mixture of divinyl and polyvinyl monomers (monomers II), the fraction of polyvinyl monomers being in the range from 2% to 90% by weight based on the monomers II, and also
0% to 30% by weight of miscellaneous monomers (monomer III),
all based on the total weight of the monomer, by heating an oil-in-water emulsion in which the monomers, a free-radical initiator and the lipophilic substance are present as disperse phase.

10. The process for producing microcapsules according to claim 9 by
a) producing an oil-in-water emulsion comprising the monomers, the lipophilic substance and polyvinyl alcohol and/or partially hydrolyzed polyvinyl acetate, the average size of the oil droplets being 1.5-2.5 µm, and
b) free-radically polymerizing the monomers of the oil-in-water emulsion obtained by a).

11. The process for producing microcapsules according to claim 9 or 10 by contacting the microcapsular dispersion with one or more polyelectrolytes.

12. The use of the microcapsules according to the claims 1 to 8 as latent heat storage media for incorporation in textiles.

13. The use of the microcapsules according to the claims 1 to 8 as latent heat storage media in hindered building materials.

14. The use of the microcapsular dispersion according to claim 8 as latent heat storage medium in heat transfer fluids.

## Revendications

1. Microcapsules comprenant un noyau de capsule et une paroi de capsule, la paroi de capsule étant constituée par
30 à 90 % en poids d'un ou de plusieurs esters alkyliques en C₁-C₂₄ de l'acide acrylique et/ou méthacrylique, d'acide acrylique, d'acide méthacrylique et/ou d'acide maléique (monomères I),
10 à 70 % en poids d'un mélange de monomères de divinyle et de polyvinyle (monomères II), la proportion des monomères de polyvinyle étant de 2 à 90 % en poids par rapport aux monomères II, ainsi que
0 à 30 % en poids d'un ou de plusieurs autres monomères (monomères III),
à chaque fois par rapport au poids total des monomères.

2. Microcapsules selon l'une quelconque de la revendication 1, dans lesquelles les microcapsules ont une taille de particule moyenne de 1,5 à 2,5 µm et 90 % des particules ont une taille de particule ≤ 4 µm.

3. Microcapsules selon la revendication 1 ou 2, dans lesquelles la proportion des monomères de polyvinyle est de 5 à 80 % en poids, par rapport à la somme des monomères de divinyle et de polyvinyle.

4. Microcapsules selon l'une quelconque des revendications 1 à 3, dans lesquelles le monomère de polyvinyle est choisi dans le groupe comprenant le triacrylate et -méthacrylate de triméthylolpropane, l'éther triallylique de pentaérythrite, l'éther tétraallylique de pentaérythrite, le triacrylate de pentaérythrite et le tétraacrylate de pentaérythrite.

5. Microcapsules selon l'une quelconque des revendications 1 à 3, dans lesquelles le noyau des capsules est une substance lipophile présentant une transition de phases solide/liquide dans la plage de températures allant de -20 à 120 °C.

6. Microcapsules selon l'une quelconque des revendications 1 à 5, dans lesquelles des polyélectrolytes ayant un poids moléculaire moyen de 500 g/mol à 10 millions g/mol sont en outre agencés sur la surface extérieure de la paroi des capsules.

7. Microcapsules selon l'une quelconque des revendications 1 à 6, dans lesquelles la quantité de polyélectrolytes est de 0,1 à 10 % en poids, par rapport au poids total des microcapsules portant des polyélectrolytes.

8. Microcapsules selon l'une quelconque des revendications 1 à 7, sous la forme d'une dispersion aqueuse.

9. Procédé de fabrication de microcapsules selon les revendications 1 à 11, comprenant un noyau de capsule et une paroi de capsule, la paroi de capsule étant constituée par
30 à 90 % en poids d'un ou de plusieurs esters alkyliques en C₁-C₂₄ de l'acide acrylique et/ou méthacrylique (monomères I),
10 à 70 % en poids d'un mélange de monomères de divinyle et de polyvinyle (monomères II), la proportion des monomères de polyvinyle étant de 2 à 90 % en poids par rapport aux monomères II, ainsi que
0 à 30 % en poids d'autres monomères (monomères III), à chaque fois par rapport au poids total des monomères, selon lequel une émulsion huile dans eau, dans laquelle les monomères, un démarreur radicalaire et la substance lipophile se présentent en tant que phase dispersée, est chauffée.

10. Procédé de fabrication de microcapsules selon la revendication 9, selon lequel
a) une émulsion huile dans eau, contenant les monomères, la substance lipophile et un alcool polyvinylique et/ou un polyacétate de vinyle partiellement hydrolysé est fabriquée, la taille moyenne des gouttelettes d'huile étant de 1,5 à 2,5 µm, et
b) les monomères de l'émulsion huile dans l'eau obtenue selon a) sont polymérisés par voie radicalaire.

11. Procédé de fabrication de microcapsules selon la revendication 9 ou 10, selon lequel la dispersion de microcapsules est mise en contact avec un ou plusieurs polyélectrolytes.

12. Utilisation des microcapsules selon les revendications 1 à 8 en tant qu'accumulateur de chaleur latent pour l'incorporation dans des textiles.

13. Utilisation des microcapsules selon les revendications 1 à 8 en tant qu'accumulateur de chaleur latent dans des matières de construction liantes.

14. Utilisation de la dispersion de microcapsules selon la revendication 8 en tant qu'accumulateur de chaleur latent dans des liquides caloporteurs.
